# EUROPÄISCHE PATENTSCHRIFT

(11) **EP 1 210 515 B1**
(45) Veröffentlichungstag und Bekanntmachung des Hinweises auf die Patenterteilung: **01.03.2006**
(21) Anmeldenummer: 00965766.9
(22) Anmeldetag: 17.08.2000
(51) Int. Cl.: F02M 51/06

(54) **BRENNSTOFFEINSPRITZVENTIL**
FUEL INJECTION VALVE
SOUPAPE D'INJECTION DE CARBURANT

(30) Priorität: 18.08.1999 DE 19939133
(43) Veröffentlichungstag der Anmeldung: 05.06.2002
(73) Patentinhaber: ROBERT BOSCH GMBH, 70442 Stuttgart (DE)
(72) Erfinder: RUEHLE, Wolfgang, 71254 Ditzingen (DE); STIER, Hubert, 71679 Asperg (DE); BOEE, Matthias, 71640 Ludwigsburg (DE); HOHL, Guenther, 70569 Stuttgart (DE); KEIM, Norbert, 74369 Loechgau (DE)
(86) Internationale Anmeldenummer: PCT/DE2000/002801
(87) Internationale Veröffentlichungsnummer: WO 2001/012977

(56) Entgegenhaltungen:
- DE-A- 19 500 706
- DE-A- 19 708 304
- DE-C- 19 854 506
- US-A- 4 858 439

## Beschreibung

### Stand der Technik

Die Erfindung geht aus von einem Brennstoffeinspritzventil nach der Gattung des unabhängigen Anspruchs 1.

Aus der DE 195 00 706 A1 ist ein Brennstoffeinspritzventil nach der Gattung des Hauptanspruchs bekannt. Dabei ist ein Hubübersetzer oder Wegtransformator vorgesehen, der einen relativ kleinen Stellweg des Aktors, beispielweise eines Piezoaktors, in einen größeren Hub der Ventilnadel umsetzt. Dabei wird die Ausdehnung des Aktors über einen Arbeitskolben des Hubübersetzers in eine Verstärkerkammer einceleitet und über einen Hubkolben auf die Ventilnadel übertragen, die einen im verhältnis der die Verstärkerkammer stirnseitig begrenzenden Kolbenfläche vergrößerten Hub ausführt. Zur Kompensation von Temperatureinflüssen, Verschleiß und Fertigungstoleranzen auf den Stellweg des Aktors besitzt die Verstärkerkammer ein definiertes Leck, das durch einen Ringspalt zwischen dem Kolben und einer Ventilgehäusewand realisiert ist und einen genügend hohen Strömungswiderstand besitzt, so daß die Bewegungen des Aktors im wesentlichen ungedämpft auf die Ventilnadel übertragen werden. Als Hydraulikmedium der Hubübersetzung wird der Brennstoff selbst, im Fall der DE 195 00 706 A1 Dieselbrennstoff, verwendet.

Das aus der DE 195 00 706 A1 bekannte Brennstoffeinspritzventil hat den Nachteil, daß insbesondere bei hohen Drehzahlen der Brennkraftmaschine im Bereich des Ringspaltes durch die bei der Betätigung des Aktors auftretenden Reibungskräfte eine hohe Verlustwärme auftritt. Die dabei auftretenden Belastungen und Abnützungen des Kolbens und der Ventilgehäusewand im Bereich des Ringspaltes beeinträchtigen die Funktionsweise der Temperaturkompensation und verringern die Lebensdauer des Brennstoffeinspritzventils.

Außerdem erfordert die bekannte Temperaturkompensationseinrichtung einen hohen baulichen Aufwand, was die Fertigungskosten des Brennstoffeinspritzventils vergrößert. Ein weiterer Nachteil ist, daß das durch den Ringspalt definierte Leck nur durch eine Änderung des Fertigungsprozesses geändert werden kann, so daß sich die Temperaturkompensation nicht auf die speziellen Anforderungen des Einsatzes des Brennstoffeinspritzventils anpassen läßt.

### Vorteile der Erfindung

Das erfindungsgemäße Brennstoffeinspritzventil mit den Merkmalen des unabhängigen Anspruchs 1 hat demgegenüber den Vorteil, daß es eine verschleißfreie Temperaturausgleichsvorrichtung aufweist, die einen einfachen Aufbau aufweist, einfach zum Einbauen ist und universell zur Anwendung kommen kann.

Ein weiterer Vorteil ist, daß sich durch die Ausgestaltung der Drossel, insbesondere durch deren Querschnitt die Temperaturausgleichsvorrichtung in einfacher Weise und kostengünstig an die speziellen Anforderungen eines Brennstoffeinspritzventils anpassen läßt.

Durch die in den abhängigen Ansprüchen aufgeführten Maßnahmen sind vorteilhafte Weiterbildungen des im Hauptanspruch angegebenen Brennstoffeinspritzventils möglich.

Vorteilhaft ist es, daß das Gehäuse der Temperaturausgleichsvorrichtung eine erste und eine zweite Druckplatte aufweist, wobei die Druckplatten zumindest annähernd senkrecht zu der Betätigungsrichtung des Aktors orientiert sind. Dadurch ist eine vorteilhafte Übertragung der Aktorkraft des Aktors auf den mit der Ventilsitzfläche zu dem Dichtsitz zusammenwirkenden Ventilschließkörper gegeben.

Vorteilhaft ist es, daß das Gehäuse der Temperaturausgleichsvorrichtung einen elastischen Mantel aufweist, der an seinen Enden mit den Druckplatten verbunden ist. Dabei ist es besonders vorteilhaft, daß der Mantel mehrfach gefaltet oder wellenförmig ausgebildet ist. Dadurch ist eine einfache und zweckmäßige Ausgestaltung der Temperaturausgleichsvorrichtung gegeben.

In vorteilhafter Weise liegt eine Stirnseite des Aktors an einer Anlagefläche der ersten Druckplatte an. Durch die direkte Kraftübertragung des Aktors auf die erste Druckplatte der Temperaturausgleichsvorrichtung ist eine besonders günstige Kraftübertragung gegeben.

In vorteilhafter Weise ist die Drossel durch eine Aussparung in dem Gehäuse der Temperaturausgleichsvorrichtung gebildet. Dadurch ist eine wartungsarme, verschleißfreie und kostengünstige Ausbildung der Drossel der Temperaturausgleichsvorrichtung gegeben.

Vorteilhaft ist es, daß die Aussparung in der zweiten Druckplatte vorgesehen ist. Da die zweite Druckplatte nicht elastisch verformt wird, ist dadurch eine zumindest nahezu konstante Drosselung der Drossel gegeben.

Vorteilhaft ist es, daß die Temperaturausgleichsvorrichtung eine in dem Innenraum der Temperaturausgleichsvorrichtung angeordnete Rückstellfeder aufweist. Dadurch kann die Druckdose kraftschlüssig über eine Feder im Doseninnenraum im Kontakt mit dem Aktor und ferner mit zum Beispiel einer Ventilnadel oder einem Gehäuse des Brennstoffeinspritzventils aehalten werden.

### Zeichnung

Ausführungsbeispiele der Erfindung sind in den Zeichnungen vereinfacht dargestellt und in der nachfolgenden Beschreibung näher erläutert. Es zeigen:
- Fig. 1: einen axialen Schnitt durch ein erstes Ausführungsbeispiel eines erfindungsgemäßen Brennstoffeinspritzventils;
- Fig. 2: ein zweites Ausführungsbeispiel des in Fig. 1 mit II bezeichneten Details;
- Fig. 3: die zweite Druckplatte 22 des zweiten Ausführungsbeispiels.

### Beschreibung der Ausführungsbeispiele

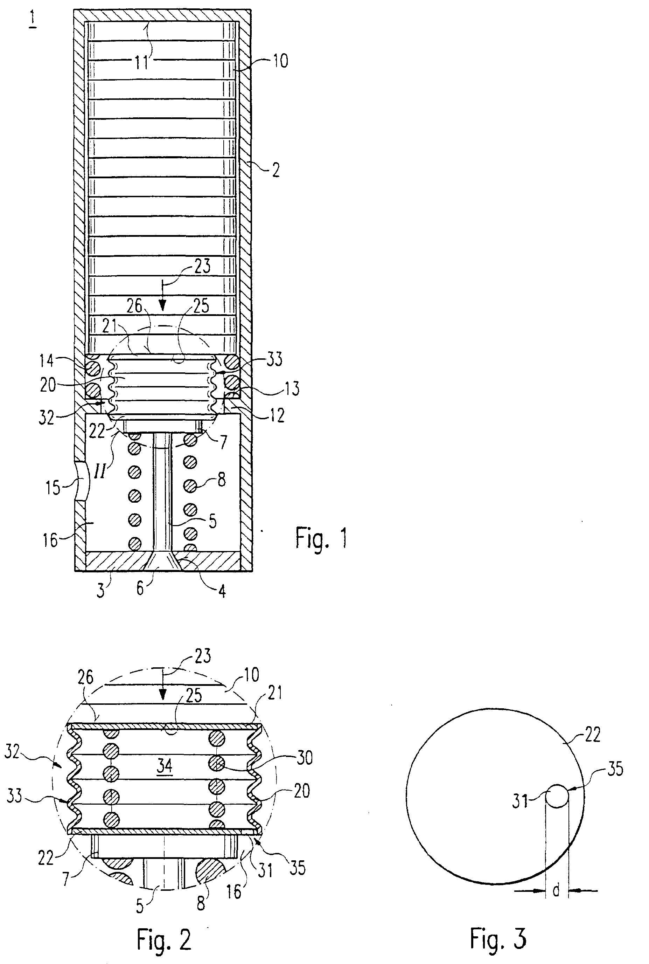

Fig. 1 zeigt in einer auszugsweisen axialen Schnittdarstellung ein erfindungsgemäßes Brennstoffeinspritzventil 1. In diesem Ausführungsbeispiel ist das Brennstoffeinspritzventil 1 als außenöffnendes Brennstoffeinspritzventil 1 ausgeführt. Das Brennstoffeinspritzventil 1 dient insbesondere zum direkten Einspritzen von Brennstoff, insbesondere von Benzin, in einen Brennraum einer gemischverdichtenden, fremdgezündeten Brennkraftmaschine als sogenanntes Benzindirekteinspritzventil. Das erfindungsgemäße Brennstoffeinspritzventil 1 eignet sich jedoch auch für andere Anwendungsfälle.

Das Brennstoffeinspritzventil 1 weist ein Ventilgehäuse 2 auf, das vereinfacht dargestellt ist. Am abspritzseitigen Ende des Brennstoffeinspritzventils 1 ist das Ventilgehäuse 2 mit einem Ventilsitzkörper 3 verbunden, der eine Ventilsitzfläche 4 aufweist. Die Ventilsitzfläche 4 wirkt mit einem von einer Ventilnadel 5 betätigbaren Ventilschließkörper 6 zu einem Dichtsitz zusammen. In diesem Ausführungsbeispiel ist der Ventilschließkörper 6 einteilig mit der Ventilnadel 5 ausgebildet. Die Ventilnadel 5 ist mit einer Zwischenplatte 7 verbunden, an der sich eine Schließfeder 8 abstützt. Außerdem ermöglicht die Zwischenplatte 7 eine günstige Kraftübertragung auf die Ventilnadel 5. Die Schließfeder 8 stützt sich einerseits an der Zwischenplatte 7 und andererseits an dem Ventilsitzkörper 3 ab, wodurch der durch den Ventilschließkörper 6 und die Ventilsitzfläche 4 gebildete Dichtsitz mit einer Schließkraft beaufschlagt ist.

Im Inneren des Brennstoffeinspritzventils 1 ist ein piezoelektrischer oder magnetostriktiver Aktor 10 angeordnet, der sich an dem dem abspritzseitigen Ende abgewandten Ende des Brennstoffeinspritzventils 1 an einer Innenfläche 11 des Ventilgehäuses 2 abstützt. Das Ventilgehäuse 2 weist einen im Inneren des Brennstoffeinspritzventils 1 umlaufenden Bund 12 auf. Der Bund 12 weist eine kreisringförmige Anlagefläche 13 auf, an der sich eine Vorspannfeder 14 abstützt, wodurch der Aktor 10 mit einer Vorspannung beaufschlagt ist.

Das Ventilgehäuse 2 des Brennstoffeinspritzventils 1 weist außerdem eine Aussparung 15 auf, wodurch ein Brennstoffeinlaß zum Einströmen von Brennstoff in einen Brennstoffraum 16 des Brennstoffeinspritzventils 1 gebildet ist. In diesem Ausführungsbeispiel ist der Brennstoffeinlaß seitlich an dem Ventilgehäuse 2 des Brennstoffeinspritzventils 1 angebracht.

Im Inneren des Brennstoffeinspritzventils 1 ist eine Temperaturausgleichsvorrichtung 32 vorgesehen, die einen elastischen Mantel 20, eine erste Druckplatte 21 und eine zweite Druckplatte 22 umfaßt. Dabei ist der elastische Mantel 20 mit der ersten Druckplatte 21 und der zweiten Druckplatte 22 verbunden, wodurch ein Gehäuse 33 der Temperaturausgleichsvorrichtung 32 gebildet ist. Dabei dichtet die Verbindung des elastischen Mantels 20 mit der ersten Druckplatte 21 und der zweiten Druckplatte 22 einen Innenraum 34 (Fig. 2) des Gehäuses 33 der Temperaturausgleichsvorrichtung 32 gegen den Brennstoffraum 16 ab.

Das Gehäuse 33 der Temperaturausgleichsvorrichtung 32 weist eine Drossel 35 auf. Die Drossel 35 kann z.B. durch eine Aussparung 31 in dem elastischen Mantel 20 und/oder der ersten Druckplatte 21 und/oder der zweiten Druckplatte 22 ausgebildet sein. Die Drossel 35 kann auch anders, z.B. durch ein Metallrohr oder durch Kammern im Inneren des Gehäuses 33 der Temperaturausgleichsvorrichtung 32 gebildet sein.

Durch die in der Temperaturausgleichsvorrichtung 32 vorgesehene Drossel 35 wird der Innenraum 34 des Gehäuses 33 der Temperaturausgleichsvorrichtung 32 mit dem Brennstoffraum 16 respektive dem Brennstoffeinlaß 15 verbunden, so daß ein Eintritt und Austritt von Brennstoff in das Gehäuse 33 der Temperaturausgleichsvorrichtung 32 ermöglicht ist. Durch den Querschnitt der Drossel 35 ist eine Drosselung des Eintritts und Austritts von Brennstoff in das Gehäuse 33 der Temperaturausgleichsvorrichtung 32 eingestellt. Die Einstellung des Querschnitts erfolgt dabei so, daß bei einer temperaturbedingten Längenänderung von Bauteilen des Brennstoffeinspritzventils 1, z.B. des Aktors 10 oder der Ventilnadel 5, eine quasistatische Längenänderung der Temperaturausgleichsvorrichtung 32 zum Ausgleichen der temperaturbedingten Längenänderung erfolgt und daß ferner bei einer Betätigung des Aktors 10 eine Längenänderung der Temperaturausgleichsvorrichtung 32 zumindest annähernd unterbleibt, so daß die bei der Betätigung des Aktors 10 erfolgte Längenänderung des Aktors 10 auf den Ventilschließkörper 6 übertragen wird.

Die Temperaturausgleichsvorrichtung 32 wirkt somit als mechanischer Hochpass, dessen Übertragungsverhalten über den Querschnitt der Drossel 35 eingestellt werden kann, wobei die Einstellung so erfolgt, daß eine Übertragung auf der Zeitskala eines Betätigungszyklusses des Brennstoffeinspritzventils 1 zumindest nahezu ungedämpft erfolgt. Durch den Querschnitt der Drossel 35 kann daher die Temperaturausgleichsvorrichtung 32 des Brennstoffeinspritzventils 1 an verschiedene Anforderungen angepaßt werden.

Um eine günstige Kraftübertragung des Aktors 10 auf den Ventilschließkörper 6 zu erreichen, liegt eine Stirnseite 25 des Aktors 10 an einer Anlagefläche 26 der ersten Druckplatte 21 an, wobei die Druckplatte 21 senkrecht zu einer Betätigungsrichtung 23 des Aktors 10 orientiert ist. Außerdem ist auch die zweite Druckplatte 22 senkrecht zu der Betätigungsrichtung 23 des Aktors 10 orientiert, so daß eine Längenänderung des Aktors 10 in der Betätigungsrichtung 23 einen Ventilnadelhub der Ventilnadel 5 bewirkt, wodurch der Ventilschließkörper 6 von der Ventilsitzfläche 4 abhebt und der Brennstoff aus dem Brennstoffraum 16 über den zwischen dem Ventilschließkörper 6 und der Ventilsitzfläche 4 entstandenen Spalt aus dem Brennstoffeinspritzventil 1 abgespritzt wird.

Damit bei einer temperaturbedingten Längenänderung von Bauteilen des Brennstoffeinspritzventils 1, die eine Vergrößerung des Abstandes zwischen der Stirnseite 25 des Aktors 10 und der Zwischenplatte 7 zur Folge hat, z.B. bei einer Abkühlung des Aktors 10 oder der Ventilnadel 5, eine entsprechende Vergrößerung des Gehäuses 33 der Temperaturausgleichsvorrichtung 32 stattfindet, ist in diesem Ausführungsbeispiel die erste Druckplatte 21 an der Anlagefläche 26 mit der Stirnseite 25 des Aktors 10 verbunden und die zweite Druckplatte 22 ist mit der Zwischenplatte 7 verbunden. Die Verbindung erfolgt dabei stoffschlüssig, z.B. durch Kleben, Bördeln oder Schweißen.

Der elastische Mantel 20 kann mehrfach gefaltet oder wellenförmig ausgebildet sein. Dadurch lassen sich große temperaturbedingte Längenänderungen von Bauteilen des Brennstoffeinspritzventils 1 kompensieren.

Fig. 2 zeigt ein zweites Ausführungsbeispiel des in Fig. 1 mit II bezeichneten Details in einer teilweisen Schnittdarstellung. Im Unterschied zu dem ersten Ausführungsbeispiel weist die Temperaturausgleichsvorrichtung 32 des zweiten Ausführungsbeispieles zusätzlich eine Rückstellfeder 30 auf, die im Innenraum 34 des Gehäuses 33 der Temperaturausgleichsvorrichtung 32 vorgesehen ist. Bereits beschriebene Elemente weisen übereinstimmende Bezugszeichen auf, so daß sich eine wiederholende Beschreibung erübrigt.

In diesem Ausführungsbeispiel ist das Gehäuse 33 der Temperaturausgleichsvorrichtung 32 durch die auf die beiden Druckplatten 21 und 22 einwirkende Rückstellfeder 30 mit einer Vorspannung beaufschlagt. Bei einer temperaturbedingten Längenänderung von Bauteilen des Brennstoffeinspritzventils 1, die eine Vergrößerung des Abstandes zwischen der Zwischenplatte 7 und der Stirnseite 25 des Aktors 10 zur Folge hat, wird durch die von der Rückstellfeder 30 erzeugte Vorspannung eine Ausdehnung des Gehäuses 33 der Temperaturkompensation entlang der Betätigungsrichtung 23 des Aktors 10 erreicht. In diesem Ausführungsbeispiel kann daher eine formschlüssige Verbindung der ersten Druckplatte 21 an der Anlagefläche 26 mit der Stirnseite 25 des Aktors 10 entfallen, da über die Rückstellfeder 30 im Innenraum 34 des Gehäuses 33 der Temperaturausgleichsvorrichtung 32 eine kraftschlüssige Verbindung der ersten Druckplatte 21 an der Anlagefläche 26 mit der Stirnseite 25 des Aktors 10 erreicht ist. Entsprechend ist die zweite Druckplatte 22 mit der Zwischenplatte 7 kraftschlüssig, aber nicht formschlüssig verbunden.

In diesem Ausführungsbeispiel weist die zweite Druckplatte 22 eine Aussparung 31 auf, wodurch die Drossel 35 in dem Gehäuse der Temperaturausgleichsvorrichtung gebildet ist.

Die Aussparung 31 ist außerhalb einer Anlagefläche, an der die Zwischenplatte 7 an der zweiten Druckplatte 22 anliegt, angebracht, so daß die Aussparung 31 nicht von der Zwischenplatte 7 verdeckt ist. Die Aussparung 31 ist außerdem dem Brennstoffraum 16 zugewandt, so daß der Eintritt und Austritt von Brennstoff in das Gehäuse 33 der Temperaturausgleichsvorrichtung 32 bei einer temperaturbedingten Längenänderung von Bauteilen des Brennstoffeinspritzventils 1 ungehindert erfolgen kann.

Fig. 3 zeigt die in Fig. 2 dargestellte zweite Druckplatte 22 des zweiten Ausführungsbeispiels. Dabei ist durch die Aussparung 31 in der zweiten Druckplatte 22 die Drossel 35 in dem Gehäuse 33 der Temperaturausgleichsvorrichtung 32 gebildet. Da die Aussparung 31 in diesem Ausführungsbeispiel kreisförmig ausgebildet ist, kann durch den Durchmesser d der Aussparung 31 der Querschnitt der Drossel 35 eingestellt werden.

Die Erfindung ist nicht auf die beschriebenen Ausführungsbeispiele beschränkt. Insbesondere eignet sich die Erfindung auch für ein innenöffnendes Brennstoffeinspritzventil 1. Außerdem kann die Temperaturausgleichsvorrichtung 32 auch an anderen Positionen in dem Brennstoffeinspritzventil 1 angeordnet sein. Insbesondere kann der Aktor 10 an der Stirnseite 25 direkt auf die Zwischenplatte 7 einwirken und die Temperaturausgleichsvorrichtung 32 kann mit einer der Druckplatten 21, 22 an der Innenfläche 11 des Ventilgehäuses 2 des Brennstoffeinspritzventils 1 anliegen, wobei der Aktor 10 dann über die Temperaturausgleichsvorrichtung 32 auf die Innenfläche 11 einwirkt.

## Patentansprüche

1. Brennstoffeinspritzventil (1), insbesondere Einspritzventil für Brennstoffeinspritzanlagen von Brennkraftmaschinen, mit einem piezoelektrischen oder magnetosuriktiven Aktor (10), einem von dem Aktor (10) betätigbaren Ventilschließkörper (6), der mit einer Ventilsitzfläche (4) zu einem Dichtsitz zusammenwirkt, und mit einer Temperaturausgleichsvorrichtung (32),
**dadurch gekennzeichnet,**
**daß** die Temperaturausgleichsvorrichtung (32) ein längs einer Betätigungsrichtung (23) des Aktors (10) elastisch verformbares Gehäuse (33) und zumindest eine einen Innenraum (34) des Gehäuses (33) mit einem Brennstoffeinlaß (15) des Brennstoffeinspritzventils (1) verbindende Drossel (35) aufweist, deren Querschnitt so bemessen ist, daß ein Eintritt und Austritt von Brennstoff in das Gehäuse (33) der Temperaturausgleichsvorrichtung (32) bei einer temperaturbedingten Längenänderung von Bauteilen des Brennstoffeinspritzventils (1) ermöglicht ist.

2. Brennstoffeinspritzventil nach Anspruch 1,
**dadurch gekennzeichnet,**
**daß** das Gehäuse (33) der Temperaturausgleichsvorrichtung (32) eine erste Druckplatte (21) und eine zweite Druckplatte (22) aufweist, wobei die Druckplatten (21, 22) zumindest annähernd senkrecht zu der Betätigungsrichtung (23) des Aktors (10) orientiert sind.

3. Brennstoffeinspritzventil nach Anspruch 2,
**dadurch gekennzeichnet,**
**daß** das Gehäuse (33) der Temperaturausgleichsvorrichtung (32) einen elastischen Mantel (20) aufweist, der an seinen Enden mit den Druckplatten (21, 22) verbunden ist.

4. Brennstoffeinspritzventil nach Anspruch 3,
**dadurch gekennzeichnet,**
**daß** der Mantel (20) mehrfach gefaltet oder wellenförmig ausgebildet ist.

5. Brennstoffeinspritzventil nach einem der Ansprüche 2 bis 4,
**dadurch gekennzeichnet,**
**daß** eine Stirnseite (25) des Aktors (10) an einer Anlagefläche (26) der ersten Druckplatte (21) anliegt.

6. Brennstoffeinspritzventil nach einem der Ansprüche 1 bis 5,
**dadurch gekennzeichnet,**
**daß** die Drossel (35) durch eine Aussparung (31) in dem Gehäuse (33) der Temperaturausgleichsvorrichtung (32) gebildet ist.

7. Brennstoffeinspritzventil nach Anspruch 2 und 6,
**dadurch gekennzeichnet,**
**daß** die Aussparung (31) in der zweiten Druckplatte (22) vorgesehen ist.

8. Brennstoffeinspritzventil nach einem der Ansprüche 1 bis 7,
**dadurch gekennzeichnet,**
**daß** der Aktor (10) über die Temperaturausgleichsvorrichtung (32) auf den Ventilschließkörper (6) einwirkt.

9. Brennstoffeinspritzventil nach einem der Ansprüche 1 bis 8,
**dadurch gekennzeichnet,**
**daß** die Temperaturausgleichsvorrichtung (32) eine in dem Innenraum (34) der Temperaturausgleichsvorrichtung (32) angeordnete Rückstellfeder (30) aufweist.

## Claims

1. Fuel injection valve (1), in particular injection valve for fuel injection systems of internal combustion engines, with a piezoelectric or magnetostrictive actuator (10), with a valve-closing body (6) which is actuable by the actuator (10) and which co-operates with a valve-seat surface (4) to form a sealing seat, and with a temperature compensation device (32), **characterized in that** the temperature compensation device (32) has a housing (33) elastically deformable along a direction of actuation (23) of the actuator (10) and at least one throttle (35) which connects an inner space (34) of the housing (33) to a fuel inlet (15) of the fuel injection valve (1) and the cross section of which is dimensioned such that an entry and exit of fuel into and out of the housing (33) of the temperature compensation device (32) are made possible in the event of a temperature-induced length change of components of the fuel injection valve (1).

2. Fuel injection valve according to Claim 1, **characterized in that** the housing (33) of the temperature compensation device (32) has a first pressure plate (21) and a second pressure plate (22), the pressure plates (21, 22) being oriented at least approximately perpendicularly with respect to the direction of actuation (23) of the actuator (10).

3. Fuel injection valve according to Claim 2, **characterized in that** the housing (33) of the temperature compensation device (32) has an elastic casing (20) which is connected at its ends to the pressure plates (21, 22).

4. Fuel injection valve according to Claim 3, **characterized in that** the casing (20) is multiply folded or is of wavy design.

5. Fuel injection valve according to one of Claims 2 to 4, **characterized in that** one end face (25) of the actuator (10) bears against a bearing surface (26) of the first pressure plate (21).

6. Fuel injection valve according to one of Claims 1 to 5, **characterized in that** the throttle (35) is formed by a clearance (31) in the housing (33) of the temperature compensation device (32).

7. Fuel injection valve according to Claims 2 and 6, **characterized in that** the clearance (31) is provided in the second pressure plate (22).

8. Fuel injection valve according to one of Claims 1 to 7, **characterized in that** the actuator (10) acts on the valve-closing body (6) via the temperature compensation device (32).

9. Fuel injection valve according to one of Claims 1 to 8, **characterized in that** the temperature compensation device (32) has a return spring (30) arranged in the inner space (34) of the temperature compensation device (32).

## Revendications

1. Injecteur de carburant (1), en particulier injecteur pour dispositifs d'injection de carburant de moteurs à combustion interne, comprenant un actionneur piézoélectrique ou magnétostrictif (10), un corps de fermeture de soupape (6) pouvant être actionné par l'actionneur (10) qui coopère avec une surface de siège de soupape (4) pour former un siège étanche, et un dispositif d'équilibrage de la température (32),
**caractérisé en ce que**
le dispositif d'équilibrage de la température (32) présente un boîtier (33) élastiquement déformable le long d'une direction d'acüonnement (23) de l'actionneur (10) et au moins un étrangleur (35) reliant un espace intérieur (34) du boîtier (33) avec une entrée de carburant (15) de l'injecteur de carburant (1), étrangleur dont la section transversale est mesurée de manière à permettre une entrée et une sortie de carburant dans le boîtier (33) du dispositif d'équilibrage de la température (32) lors d'une modification de longueur, due à la température, de composants de l'injecteur de carburant (1).

2. Injecteur de carburant selon la revendication 1,
**caractérisé en ce que**
le boîtier (33) du dispositif d'équilibrage de la température (32) présente un premier plateau de compression (21) et un deuxième plateau de compression (22), les plateaux de compression (21, 22) étant orientés approximativement perpendiculairement à la direction d'actionnement (23) de l'actionneur (10).

3. Injecteur de carburant selon la revendication 2,
**caractérisé en ce que**
le boîtier (33) du dispositif d'équilibrage de la température (32) présente une enveloppe élastique (20) reliée par ses extrémités aux plateaux de compression (21, 22).

4. Injecteur de carburant selon la revendication 3,
**caractérisé en ce que**
l'enveloppe (20) est pliée plusieurs fois ou est ondulée.

5. Injecteur de carburant selon l'une des revendications 2 à 4,
**caractérisé en ce qu'**
une face frontale (25) de l'actionneur (10) repose contre une surface d'appui (26) du premier plateau de compression (21).

6. Injecteur de carburant selon l'une des revendications 1 à 5,
**caractérisé en ce que**
l'étrangleur (35) est formé par un évidement (31) dans le boîtier (33) du dispositif d'équilibrage de la température (32).

7. Injecteur de carburant selon les revendications 2 et 6,
**caractérisé en ce que**
l'évidement (31) est prévu dans le deuxième plateau de compression (22).

8. Injecteur de carburant selon l'une des revendications 1 à 7,
**caractérisé en ce que**
l'actionneur (10) agit sur le corps de fermeture de soupape (6) par le dispositif d'équilibrage de la température (32).

9. Injecteur de carburant selon l'une des revendications 1 à 8,
**caractérisé en ce que**
le dispositif d'équilibrage de la température (32) présente un ressort de rappel (30) disposé dans l'espace intérieur (34) du dispositif d'équilibrage de la température (32).
